# EUROPEAN PATENT APPLICATION

(11) **EP 4 765 707 A1**
(43) Date of publication of application: **24.06.2026**
(21) Application number: 24220549.0
(22) Date of filing: 17.12.2024
(51) Int. Cl.: H04L 5/00, H04W 64/00, H04L 27/26

(54) **METHOD AND APPARATUS FOR SUPPORTING POSITIONING SERVICES IN A COMMUNICATION SYSTEM**

(71) Applicant: Airbus Defence and Space GmbH, 82024 Taufkirchen (DE)
(72) Inventor: Gröber, Tobias, 82024 Taufkirchen (DE); Soualle, Francis, 82024 Taufkirchen (DE); del Peral Rosado, Jose Antonio, 82024 Taufkirchen (DE)
(74) Representative: Isarpatent

(57) **Abstract**

Provided is a method (200) for supporting positioning services in a communication system, and a corresponding apparatus (400). The method comprises generating (210), by at least one transmitter (110, 120), at least one reference signal; allocating (220), by the at least one transmitter (110, 120), the at least one reference signal over a bandwidth, wherein the at least one reference signal is muted in frequency domain according to a frequency muting pattern; and transmitting (230), by the at least one transmitter (110, 120), the allocated at least one reference signal to a receiver (110, 120).

## Description

### TECHNICAL FIELD OF THE INVENTION

The present invention relates to supporting positioning services in a communication system. Particularly, the invention relates to a method for supporting positioning services in a communication system, and a corresponding communication apparatus.

### TECHNICAL BACKGROUND

In some wireless communication systems and/or communication networks, positioning services shall be provided for user equipment (UE). High-accuracy positioning has been identified as a key feature for communication systems and/or communication networks, as besides positioning, navigation and timing (PNT) there are several industrial use cases for positioning services, such as in aviation, automotive, manufacturing, logistics, and other industries.

Those communication systems and/or communication networks can employ a multicarrier (MC) modulation technique. In the following orthogonal frequency division multiplexing (OFDM) signals are used as one and well established example of signals generated with MC techniques, where the information is modulated in subcarriers over the available bandwidth and in symbols. The OFDM subcarrier spacing is equal to the inverse of the OFDM symbol period to keep the orthogonality between subcarriers. In the 3^{rd} Generation Partnership Project (3GPP), the OFDM symbols and subcarriers can be grouped in so called resource blocks (RBs). In the 4G, 5G and possibly future standardizations, these RBs are combined out of 14 symbols and 12 subcarriers.

Examples of known positioning systems for providing positioning services may be categorized into two different categories, namely terrestrial network (TN)-based systems and non-terrestrial network (NTN)-based systems. An example of a TN-based system is the 5G location/positioning service, where 5G refers to the fifth-generation technology standard for cellular networks, and is also referred to as 5G New Radio (NR) as defined by the 3rd Generation Partnership Project (3GPP). Examples of an NTN-based system are mainly the global navigation satellite system (GNSS) based approaches, such as the Global Positioning System (GPS), the GLONASS system and the Galileo system.

In 5G NR, reference signals are used for supporting positioning services. These signals comprise a positioning reference signal (PRS) in the downlink (DL) and a sounding reference signal (SRS) in the uplink (UL), among others potentially usable reference signals, pilot signals or the like. In 5G NR, the PRS may be transmitted over multiple symbols that can be aggregated to accumulate power. Further, in 5G NR, multiple base stations may transmit their PRS in different subcarriers within a resource block in the frequency domain or different dedicated bandwidth parts (BWPs) to avoid interference. In case of interference, signals originating from multiple transmitters are overlapping at receiver side in the time domain and in the frequency domain, causing degradation of the received signal performance . Also, in 5G NR, the PRS from one or more base stations may be muted at a given time according to a fixed time-domain muting pattern, to reduce interference.

Apart from the above mentioned the downlink (DL) transmission from a network device, such as a gNodeB or satellite, or the like to an user equipment (UE) and the uplink (UL) transmission from an UE to a network device, such as a gNodeB or satellite, or the like, there is also the sidelink (SL).

For NTN-based systems, it has been found that the interference reduction or interference avoidance mechanisms of the 5G NR mentioned above are inadequate or insufficient. For example, it has been found that there are relatively high propagation delays of signals received from satellites, so that the PRS would have to be muted over a relatively long time period in time domain to avoid interference. This muting in time domain wastes a relatively large number of symbols that cannot be used for data transmission. It would therefore be desirable to have a more efficient way of transmitting reference signals.

### SUMMARY OF THE INVENTION

An object of the invention is to provide means for more efficiently providing reference signals for supporting positioning services in a communication system, with reduced interference. This object is solved by the subject-matter of the appended independent claims. Further embodiments are defined in the appended dependent claims.

According to a first aspect, there is provided a method for supporting positioning services in a communication system. The method comprises generating, by at least one transmitter, at least one reference signal. The method further comprises allocating, by the at least one transmitter, the at least one reference signal over a bandwidth, for example, a channel and/or a frequency bandwidth. Thereby, the at least one reference signal is muted in frequency domain according to a frequency muting pattern. The method further comprises transmitting, by the at least one transmitter, the allocated at least one reference signal to a receiver.

An idea of the present disclosure is to, e.g. selectively, mute one or more reference signals in the frequency domain according to a frequency (domain) muting pattern, to at least reduce or, more ideally, avoid interference with other signals, such as another reference signal and/or data.

The methods and apparatuses disclosed herein enable the muting of full positioning blocks (PBs), comparable to e.g. resource blocks (RBs) in 5G NR, for the one or more reference signals. This may be beneficial in terrestrial network (TN)-based communication systems as well as in non-terrestrial network-based communication systems, e.g. when using one or more satellites for positioning services, wherein interference between reference signals of different satellites may be at least reduced or, more ideally, avoided. Also, the methods and apparatuses disclosed herein enable combining NTN and TN for positioning. As the frequency muting pattern is configurable and/or adaptable, the methods and apparatuses disclosed herein provide a high degree of flexibility for, for example, unified NTN/TN positioning services and unified NTN/TN positioning, navigation and timing (PNT) services. The methods and apparatuses disclosed herein may be applied to several communication systems and/or communication networks, such as 5G new radio (NR), future 6G defined by the 3rd Generation Partnership Project (3GPP), and other future communication systems. The methods and apparatuses disclosed herein allow a user equipment (UE) to receive and process the reference signals from ground, sky and space simultaneously, for positioning services, such as position estimation, and other positioning-related services. Muting the one or more reference signals in the frequency domain according to the frequency muting pattern allows the reference signal transmission to be adapted to different transmitter-receiver configurations, or different transmitter-receiver configurations involving mobile transmitters on the ground, in the sky, or in space. Generally, the technical solutions disclosed herein may provide reduced interference of reference signals and a high signal-to-interference-plus-noise ratio (SINR). They may improve the positioning accuracy. For the receiver, the signal processing is facilitated as it is easier to correlate and identify the reference signal. Furthermore, with the reference signal muting in the frequency domain as disclosed herein, more positioning reference signals can be allocated within one radio frame without having any interference between transmitters. With this muting, the reference signal can be allocated over the whole bandwidth, e.g. channel bandwidth, and not only in dedicated bandwidth parts (BWPs). As mentioned above, the technical solutions disclosed herein also provides flexibility to adapt the reference signal allocation for different orbit constellations. Depending on, for example, the size of the constellation, the frequency muting pattern can be adapted in accordance to mute more or less positioning blocks (PBs) in the frequency domain, to avoid interference between the single satellites. The technical solutions disclosed herein are not limited to downlink (DL) or uplink (UL), but can be used for any orthogonal frequency-division multiplexing (OFDM) signal to be allocated over, also the whole, bandwidth (BW).

As used herein, the communication system may be a wireless communication system. For example, the communication system may be 5G new radio (NR), a future 6G defined by the 3rd Generation Partnership Project (3GPP), or another current or future communication system and/or communication network. At least in terms of supporting and/or providing positioning services, positioning, navigation and timing (PNT), or the like, the communication system may be a combined, joint, and/or unified NTN/TN.

Further, as used herein, in downlink (DL), the transmitter may be any network-side entity, such as a network-side communication apparatus, device, or the like. Examples may include a satellite, a high-altitude platform station (HAPS), an aircraft, a drone, a fixed base station, and a mobile base station, or the like. Correspondingly, the receiver may be a user equipment (UE), terminal, or the like. In uplink (UL), the transmitter may be a user equipment (UE), terminal, or the like. The at least one reference signal transmitted by the transmitter and received by the receiver may be different for downlink and uplink. It is noted that the methods and apparatuses disclosed herein are also applicable to other links, such as a sidelink (SL).

Furthermore, as used herein, allocating the at least one reference signal over a channel bandwidth may also be referred to as distributing one or more reference signals over the bandwidth. For example, the bandwidth or channel bandwidth as referred to herein may be understood as the range of frequency that the channel can carry. In at least some embodiments, the bandwidth or channel bandwidth as referred to herein may be a full bandwidth, in delimitation from a bandwidth part (BWP) known from 5G NR, where the total channel bandwidth is divided into multiple segments, namely the BWPs, thereby allowing a maximum number of only 4 (four) BWPs, one of which can only be activated at a specific time. Further, the bandwidth or channel bandwidth may also be referred to or may be illustrated or reflected by a time-frequency resource grid, such as the resource grid of 5G NR or, more generally, an orthogonal frequency-division multiplexing (OFDM) grid. As used herein, the whole bandwidth, e.g. the whole channel bandwidth and/or the whole resource grid or whole time-frequency grid may be used for allocating and/or distributing the one or more reference signals.

As used herein, the frequency muting pattern may be configurable for and/or adaptable by a set of parameters. For example, the frequency muting pattern may be configurable for and/or adaptable to different transmitter-receiver configurations. By way of example, the frequency muting pattern may be designed in form of a bit map, wherein this is not limited herein. The frequency muting pattern may be defined in advance, that is, may be predefined, or may be provided, e.g. transmitted and/or received, to or from the transmitter and/or receiver during operation.

Further, as used herein, the allocated and/or distributed at least one reference signal may be transmitted to the receiver to support positioning services. The received at least one reference signal may be used by the receiver to provide, also high-accuracy, location information, which may be critical for various applications, including vehicle navigation, aviation navigation, drone control, the management of robots in airports, harbors or factories, and other positioning-related services. In downlink (DL), the receiver may use the at least one reference signal to measure, for example, a time of arrival (ToA) and/or an angle of arrival (AoA), to determine the receiver's location, wherein the usage of the at least one reference signal is not limited herein.

According to an embodiment, a new unit of resources is introduced, so called positioning block (PB), in order to mute only as much resources as needed to avoid interferences. This positioning block (PB) consists of at last one or more consecutive subcarriers in the frequency domain and at least one or more consecutive OFDM symbols in the time domain, which are not limited herein. In terms of the current 5G NR standard, for example, a positioning block (PB) may be understood as being similar to or the equivalent of a resource block (RB), wherein this is not limited herein. A future communication standard may use a similar technique but may use a different term for positioning block.

According to an embodiment, the frequency muting pattern may indicate one or more positioning blocks, PBs, to be muted in the frequency domain to avoid transmitting the at least one reference signal in the one or more PBs. In this way, interference between multiple reference signals and/or interference caused by several transmitters transmitting corresponding reference signals may be at least reduced or, more ideally, avoided. For example, elements of the at least one reference signal may be allocated to a center of the PBs.

In an embodiment, the frequency muting pattern may be configurable or may be configured based on at least one of a Doppler frequency of the at least one transmitter, and a time delay in signal transmission from the at least one transmitter. The Doppler frequency and the time delay may refer to that being observed by the receiver. The at least one Doppler frequency and time delay may vary over time. For example, variation of the Doppler frequency may be dependent on a transmitter-receiver configurations between the at least one transmitter and the receiver. Alternatively or additionally, the Doppler frequencies of the at least one transmitter may vary, even significantly, dependent on, e.g., a type of transmitting platform, such as a specific type of satellite, e.g. a satellite being in a specific orbit, such as low Earth orbit (LEO), a high-altitude platform station (HAPS), an aircraft, a drone, a fixed base station, and a mobile base station. The frequency muting pattern may be configured and/or may be adapted based on varying Doppler frequencies of the at least one transmitter. Further, by way of example, the time delay may vary, and may be very high, for certain transmitter-receiver configurations. The frequency muting pattern may be configured and/or may be adapted based on varying time-delay differences in signal transmission from the at least one transmitter. Further, for example, the satellite trajectory of the at least one transmitter may affect the reference signal transmission and/or interference. The frequency muting pattern may be configured and/or may be adapted based on the satellite trajectory of the at least one transmitter. In this way, interference between multiple reference signals and/or interference caused by several transmitters transmitting corresponding reference signals may be at least reduced or, more ideally, avoided. Further, in this way, it is possible to allocate transmitter with possible collision probability in frequency separated resource blocks (RBs).

In other words, the frequency muting pattern may be configurable for and/or adaptable to different Doppler frequency-time delay variations of transmitters. Alternatively or additionally, the frequency muting pattern may be configurable for and/or adaptable according to a satellite trajectory, such as a LEO trajectory, or the like.

In an embodiment, the frequency muting pattern may be set by adapting the reference signal generation. In this way, the frequency muting pattern may already be set during the reference signal generation.

According to an embodiment, the frequency muting pattern may be implemented or may be set by using a bit map, in which each bit is set to one (1) for transmitting the positioning block and set to zero (0) for a muted positioning block, PB. For example, the frequency muting pattern may be implemented by a corresponding parameter, which may be referred to as "PBMuting".

In an embodiment, at least a size of the frequency muting pattern may configurable by at least one parameter. For example, a parameter, which may be referred to as "PBCoreMutingBandwidth", may configure the size of the frequency muting pattern bit map "PBMuting". Further, by way of example, the parameter "PBCoreMutingBandwidth" may configure the size of the parameter "PBMuting". In this way, the muting pattern may be flexibly adapted to a specific scenario, e.g. a specific constellation, etc.

It is noted that the methods and apparatus disclosed herein may receive at least one of a difference in Doppler frequency of the at least one transmitter, an indication of a frequency comb-size, and an indication of a guard interval in time as input. From this, the parameters disclosed above may be obtained and provided as output.

In an embodiment, the at least one reference signal may be allocated and/or distributed considering at least one configurable guard band in the frequency domain. A length of the guard band in frequency domain may be based, e.g. may be set based, on a Doppler frequency in signal transmission from the at least one transmitter. For example, the frequency domain guard band may be configurable. It may refer to frequency separation between PBs, RBs, or the like. By way of example, the guard band may indicate a number of subcarriers that remain unused between PBs, RBs, or the like. Within this guard band in the frequency domain, no data and/or reference signal may be transmitted. In this way, interference between multiple reference signals and/or interference caused by several transmitters transmitting corresponding reference signals may be at least reduced or, more ideally, avoided. It has been shown that the guard band in the frequency domain is less waste of resources than a guard interval in the time domain.

According to an embodiment, the at least one reference signal may be allocated or distributed considering a guard interval in time domain. A length of the guard interval in time domain may be based on at least a time delay in signal transmission from the at least one transmitter. Within this guard interval in the time domain, no data and/or reference signal may be transmitted. For example, if the at least one transmitter is a LEO satellite at zenith of the UE in an orbit at a height of approx. 1200 km, a maximum time-delay difference of this at least one transmitter to another LEO transmitter at 10° user elevation angle may be determined to be approx. 6.4 ms, wherein this value is exemplary. The guard interval in the time domain may be set to correspond to this time-delay difference. In this way, interference between multiple reference signals and/or interference caused by several transmitters transmitting corresponding reference signals may be at least reduced or, more ideally, avoided.

In an embodiment, a link direction from the at least one transmitter may be downlink, DL. For example, the at least one reference signal may be at least one of a positioning reference signal, PRS. The PRS is defined in the 5G NR. It may be deployed across multiple frequency layers and can be beamformed to increase signal strength and accuracy of positioning. For example, the PRS may be used by UE to perform measurements for positioning. These measurements may then be reported back to the network, which may calculate the UE's position using trilateration or triangulation methods. The DM-RS is defined in the 5G NR. It may be used as a physical signal for downlink radio channel estimation, especially for decoding PDSCH. In a future communication system, the reference signal may be denoted differently.

According to an embodiment, a link direction from the at least one transmitter may be uplink. For example, the at least one reference signal may be a sounding reference signal, SRS. The SRS is defined in the 5G NR. It may be used by e.g. an eNodeB to estimate channel quality in uplink. The SRS may be transmitted by the UE. In a future communication system, the reference signal may be denoted differently

In an embodiment, a link from the at least one transmitter may be a sidelink. The SL may be a link between network devices, such as between two satellites, or a link between two UEs. For example, the at least one reference signal may be a sidelink positioning reference signal, SL-PRS. The SL-PRS is defined in the 5G NR. In a future communication system, the reference signal may be denoted differently.

According to an embodiment, the communication network may comprise or may form a non-terrestrial network, NTN, or a joint combination of a NTN and a terrestrial network, TN. Although the methods and apparatuses disclosed herein can be beneficially used in a purely TN, such as 5G NR, future 6G, etc., they may be particularly beneficial when the different Doppler frequencies and/or time delays of the at least one transmitter in an NTN have to be taken into account, since muting the at least one reference signal in the frequency domain may at least reduce or, more ideally, avoid interference.

In an embodiment, the at least one transmitter may be at least one of a satellite, a high-altitude platform station, HAPS, an aircraft, a drone, a spacecraft, and a mobile base station. For example, the time delay in signal transmission may vary among those types of transmitters or platforms, respectively. For those transmitters, muting the at least one reference signal in the frequency domain may at least reduce or, more ideally, avoid interference. Alternatively or additionally, the at least one transmitter may be fixed base station.

According to an embodiment, the at least one transmitter may be a user equipment, UE. In this case, the receiver may be the network, e.g. a base station or another platform as disclosed herein. The at least one reference signal may be used for measurements, for example, to estimate UL channel propagation, beam management, etc.

According to a second aspect, there is provided a method for supporting positioning services in a communication system, the method comprises receiving, by a receiver, at least one reference signal from a transmitter. Thereby, the at least one reference signal is distributed or allocated over a bandwidth, e.g. a channel bandwidth and/or frequency bandwidth, and the at least one reference signal is muted in frequency domain according to a frequency muting pattern. The method further comprise performing, by the receiver, measurements for positioning based on the at least one reference signal.

Regarding modifications and embodiments of this method, reference is made to the first aspect.

The method of the second aspect, i.e. the method on the receiver side, may be modified according to the embodiments and/or examples explained for the first aspect, so that a repetition of the possible further embodiments and/or examples does not have to be repeated. Instead, reference is made to the description of the first aspect.

For example, in downlink (DL), the receiver may use the at least one reference signal to measure, for example, the time of arrival (ToA) and angle of arrival (AoA), to determine the receiver's location, wherein the usage of the at least one reference signal is not limited herein. In uplink (UL), the receiver may use the at least one reference signal for, for example, uplink channel sounding, channel quality estimation, synchronization, beam management, etc., wherein the usage of the at least one reference signal is not limited herein.

According to a third aspect, there is provided a communication apparatus. The communication apparatus comprises a transceiver, configured to transmit and/or receive signals. Further, the communication apparatus comprises a memory, configured to store computer instructions. The communication apparatus further comprises a processor communicatively coupled to the transceiver and the memory. Thereby, the processor is configured to execute the computer instructions stored in the memory, to enable the communication apparatus to carry out the method according to the first aspect, or to carry out the method according to the second aspect.

For example, the communication apparatus may be implemented as a chip. The chip may include the transceiver, memory, and/or processor. The transceiver may be implemented as an input/output circuit or a communication interface. The processor may also be implemented as a microprocessor, or the like. The communication apparatus may form a network-side device or may form user equipment (UE).

Another aspect provides a computer-readable storage medium. The computer-readable storage medium stores computer instructions used to implement the method according to the first aspect, or to implement the method according to the second aspect.

Another aspect provides a computer program product including instructions. When the instructions are executed by a computer, e.g. the communication apparatus of the third aspect, the computer is enabled to implement the method according to the first aspect, or to implement the method according to the second aspect.

Another aspect provides a communication system. The communication system includes the at least one transmitter and the at least one receiver of the above aspects.

The above-described aspects, embodiments, variants and examples can of course be combined without this being explicitly described. Each of the described variants and each example are thus to be regarded as optional for each of the aspects, embodiments, variants and examples or even combinations thereof. The present disclosure is thus not limited to the individual embodiments and variants in the described order or a certain combination of the aspects and variants.

### BRIEF SUMMARY OF THE DRAWINGS

The present invention is explained in more detail below with reference to the figures in the drawings. In the drawings:
- Fig. 1: illustrates an exemplary application scenario and/or communication system according to an embodiment.
- Fig. 2: is a schematic diagram of a method according to an embodiment.
- Fig. 3: is a schematic diagram of a method according to an embodiment.
- Fig. 4: illustrates an exemplary application scenario and/or communication system according to an embodiment.
- Fig. 5: is a schematic diagram illustrating exemplary transmitters from different platforms on ground, in air and in space, the transmitters having different Doppler frequencies and time delays.
- Fig. 6: is a schematic diagram illustrating exemplary positioning block (PB), according to an embodiment.
- Fig. 7: is a schematic diagram illustrating exemplary frequency muting pattern implemented or set by a bit map, according to an embodiment.
- Fig. 8: is a schematic diagram illustrating exemplary frequency muting pattern implemented or set by a repeated bit map, according to an embodiment.
- Fig. 9: is a schematic diagram illustrating exemplary frequency muting pattern within the RS allocation, according to an embodiment.
- Fig. 10: is an exemplary schematic diagram of a frequency muting pattern from two transmitters, wherein the first transmitter is farther to the receiver than the second transmitter, according to an embodiment.
- Fig. 11: is an exemplary schematic diagram of a frequency muting pattern from two transmitters, wherein both transmitters have the same distance to the receiver, according to an embodiment.
- Fig. 12: is an exemplary schematic diagram of a frequency muting pattern from two transmitter wherein the first transmitter is closer to the receiver than the second transmitter, according to an embodiment.
- Fig. 13: is a schematic diagram illustrating an exemplary frequency muting pattern according to an embodiment.
- Fig. 14: is a schematic diagram illustrating an exemplary frequency muting pattern according to an embodiment.
- Fig. 15: is a schematic diagram illustrating an exemplary frequency muting pattern according to an embodiment.
- Fig. 16: illustrates an exemplary communication apparatus according to an embodiment.

In the figures of the drawing, elements, features and components which are identical, functionally identical and of identical action are denoted in each case by the same reference designations unless stated otherwise.

### DESCRIPTION OF EXEMPLARY EMBODIMENTS

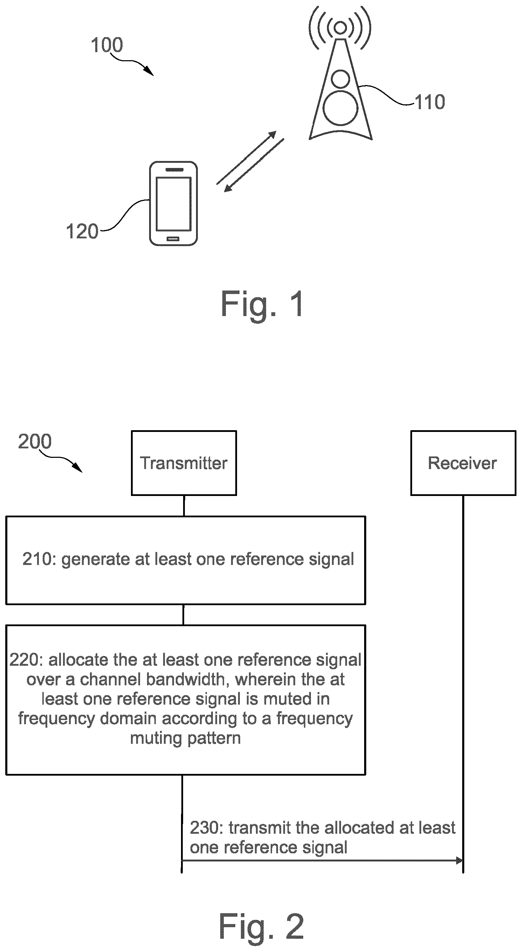

Fig. 1 illustrates in a schematic diagram an exemplary communication system 100, i.e. an exemplary application scenario, to which embodiments disclosed herein are applicable. The communication system 100 of Fig. 1 is applicable to a method for supporting positioning services in a communication system according to an embodiment. As illustrated in Fig. 1, the communication system 100 may comprise at least one network device 110 and at least one user equipment 120. One of the at least one network device 110 and the at least one user equipment 120 may be referred to as a transmitter, and the other one of the at least one network device 110 and the at least one user equipment 120 may be referred to as a receiver, depending on a direction of a communication link between the at least one network device 110 and the at least one user equipment 120, which link may be downlink (DL), uplink (UL), or sidelink (SL). It is noted that each of the at least one network device 110 and the at least one user equipment 120 may also be referred to as a communication apparatus.

For example, the network device 110 may be any device having a wireless transceiver function or a chip that may be disposed on the device. The device includes but is not limited to a base station, for example, an eNodeB, a gNodeB, or a network device, such as a transmission point (TP), a transmission reception point (TRP), a base station in a 5th generation (5G NR) communication system, a network device in a future communication system, such as 6G, an access node in a wireless fidelity (Wireless Fidelity, Wi-Fi) system, a wireless relay node, a wireless backhaul node, and the like. Further, the network device may be at least one of a satellite, a high-altitude platform station (HAPS), an aircraft, a drone, a spacecraft, and a mobile base station. The network device 110 may communicate with a plurality of user equipment, terminal devices, and the like.

Further, by way of example, the user equipment 120, which may also be referred to as a terminal device, an access terminal, a subscriber unit, a subscriber station, a mobile station, a remote station, a remote terminal, a mobile device, a user terminal, a terminal, a wireless communication device, a user agent, or a user apparatus. The user equipment 120 may be a mobile phone, a tablet computer, a computer having a wireless transceiver function, a virtual reality (VR) terminal device, an augmented reality (AR) terminal device, a wireless terminal in industrial control, a wireless terminal in self-driving applications, a wireless terminal in aviation and/or in space, a wireless terminal in transportation safety, a wireless terminal in a smart city, a wireless terminal in a smart home, or the like.

Fig. 2 illustrates in a schematic diagram a method 200 for supporting positioning services in a communication system. The method is applicable to, for example, the above communication system 100.

The method 200 comprises generating 210, by at least one transmitter, at least one reference signal.

For example, the at least one transmitter may be one of the at least one network device 110 and the at least one user equipment 120, depending on a direction of a communication link between the at least one network device 110 and the at least one user equipment 120. Correspondingly, the other one of the at least one network device 110 and the at least one user equipment 120 may be the receiver. Further, by way of example, a link direction from the at least one transmitter may be downlink. When referring to the 5G NR, for example, the at least one reference signal may be at least one of a positioning reference signal, PRS, a synchronization signal block, SSB, and a demodulation reference signal, DM-RS, or any other pilot signal or known signal. The PRS is defined in the 5G NR. It may be deployed across multiple frequency layers and can be beamformed to increase signal strength and accuracy of positioning. For example, the PRS may be used by UE to perform measurements for positioning. These measurements may then be reported back to the network, which may calculate the UE's position using trilateration or triangulation methods. The SSB is defined in the 5G NR, including synchronization signals. These synchronization signals may be used for initial receiver synchronization and cell search. The DM-RS is defined in the 5G NR. It may be used as a physical signal for downlink radio channel estimation, especially for decoding PDSCH. Alternatively, by way of example, a link direction from the at least one transmitter may be uplink. The at least one reference signal may be a sounding reference signal, SRS. The SRS is defined in the 5G NR. It may be used by e.g. an eNodeB to estimate channel quality in uplink. The SRS may be transmitted by the UE. Further, by way of example, a link from the at least one transmitter may be a sidelink, where the at least one transmitter may be a network device or the at least one transmitter may be a UE. The at least one reference signal may be a sidelink positioning reference signal, SL-PRS.

The method 200 further comprises allocating 220, by the at least one transmitter, the at least one reference signal over a bandwidth, e.g. a channel bandwidth and/or frequency bandwidth. Thereby, the at least one reference signal is muted in frequency domain according to a time and frequency muting pattern.

In at least some embodiments, the frequency muting pattern may indicate one or more positioning blocks, PBs, to be muted in the frequency domain to avoid transmitting the at least one reference signal in the one or more PBs. The positioning block, PB, used herein may be understood as the minimum size in symbols in the time domain and in subcarriers in the frequency domain for the application of the muting pattern. The frequency muting pattern may be configurable for and/or adaptable by a set of parameters. For example, the frequency muting pattern may be configurable for and/or adaptable to different transmitter-receiver configurations. By way of example, the frequency muting pattern may be designed in form of a bit map, wherein this is not limited herein. Specifically, the frequency muting pattern may be implemented or may be set by using a bit map, in which each bit is assigned to one positioning block, PB, in the frequency domain and time domain. The frequency muting pattern may be defined in advance, that is, may be predefined, or may be provided, e.g. transmitted and/or received, to or from the transmitter and/or receiver and may be updated during operation.

In at least some embodiments, the frequency muting pattern may be configurable or may be configured based on at least one of a Doppler frequency of the at least one transmitter, and a time delay in signal transmission from the at least one transmitter. For example, variation of the Doppler frequency may be dependent on a configuration between the at least one transmitter and the receiver. Alternatively or additionally, the Doppler frequencies of the at least one transmitter may vary, even significantly, depending on, e.g., a type of platform, such as a specific type of satellite, e.g. a satellite being in a specific orbit, such as low Earth orbit (LEO), a high-altitude platform station (HAPS), an aircraft, a drone, a fixed base station, and a mobile base station. The frequency muting pattern may be configured and/or may be adapted based on varying Doppler frequencies of the at least one transmitter. Further, by way of example, the time delay may vary, and may be very high, for certain transmitter-receiver configurations. The frequency muting pattern may be configured and/or may be adapted based on varying time delays in signal transmission from the at least one transmitter. Further, for example, the satellite trajectory of the at least one transmitter may affect the reference signal transmission and/or interference. The frequency muting pattern may be configured and/or may be adapted based on the satellite trajectory of the at least one transmitter. In other words, the frequency muting pattern may be configurable for and/or adaptable to different Doppler frequency-time delay variations of transmitters. Alternatively or additionally, the frequency muting pattern may be configurable for and/or adaptable according to a satellite trajectory, such as a LEO trajectory, or the like.

For example, Table 1 provides exemplary orbit heights in which the at least one transmitter may be located. Specifically, by way of example, Table 1 refers to LEO satellites. Table 1 indicates for each orbit height a time delay at 90° user elevation and a time delay at 10° user elevation. Further, Table 1 indicates for each orbit height a maximum Doppler frequency.

**Table 1:**

| Orbit height | Min. time delay (90° user elevation) | Max. time delay (10° user elevation) | Max./min. Doppler frequency |
|---|---|---|---|
| 300 km | 1 ms | 3.9 ms | ±47 kHz |
| 600 km | 2 ms | 6.4 ms | ±45.3 kHz |
| 900 km | 3 ms | 8.6 ms | ±43.3 kHz |
| 1200 km | 4 ms | 10.4 ms | ±41 kHz |

As derivable from Table 1, the time delay and the maximum/minimum Doppler frequency may vary depending on the orbit height. As mentioned above, the frequency muting pattern may be configurable based on at least one of the varying time delay and the varying Doppler frequency.

It is to be noted that, without muting in the frequency domain as disclosed herein, the maximum time delay of LEO satellites in the orbit at a height of 1200 km has to be considered. Accordingly, in at least some embodiments, the at least one reference signal may be muted considering a time offset (PBMutingTimeOffset) of the frequency muting pattern in time domain, where this time offset is based on at least a time delay in signal transmission from the at least one transmitter. Within this time offset in the time domain, no reference signal may be transmitted. For example, if the at least one transmitter is a LEO satellite in an orbit at a height of approx. 1200 km, a maximum time-delay difference of this at least one transmitter may be determined to be approx. 6.4ms (see Table 1), wherein this value is exemplary. The guard interval in the time domain may be set to correspond to this maximum time delay.

It is to be noted that, without muting in the frequency domain as disclosed herein, the maximum/minimum Doppler frequency of LEO satellites in the orbit at a height of 1200 km has to be considered. Accordingly, in at least some embodiments, the at least one reference signal may be muted considering a frequency offset (PBMutingFreqOffset) of the frequency muting pattern in the frequency domain, where this frequency offset is based on at least a Doppler frequency in signal transmission from at least one transmitter. Within this frequency offset in the frequency domain, no reference signal may be transmitted. For example, if the at least one transmitter is a LEO satellite in an orbit at a height of approx. 1200 km, a maximum Doppler difference of this at least one transmitter may be determined to be approx. 41 kHz (see Table 1), wherein this value is exemplary. The guard band in the frequency domain may be set to correspond to this maximum Doppler frequency.

The method 200 further comprises transmitting 230, by the at least one transmitter, the allocated at least one reference signal to a receiver.

As mentioned above, the receiver may be one of the at least one network device 110 and the at least one user equipment 120, depending on a direction of a communication link between the at least one network device 110 and the at least one user equipment 120. The received at least one reference signal may be used by the receiver to provide, e.g. high-accuracy, location information, which may be critical for various applications, including vehicle navigation, aviation navigation, drone control, the management of robots in airports, harbors or factories, and other positioning-related services. In downlink (DL), the receiver may use the at least one reference signal to measure, for example, a time of arrival (ToA) and/or an angle of arrival (AoA), to determine the receiver's location, wherein the usage of the at least one reference signal is not limited herein. In uplink (UL), the receiver may use the at least one reference signal for, for example, a time of arrival (ToA) and/or an angle of arrival (AoA), to determine the receiver's location, wherein the usage of the at least one reference signal is not limited herein.

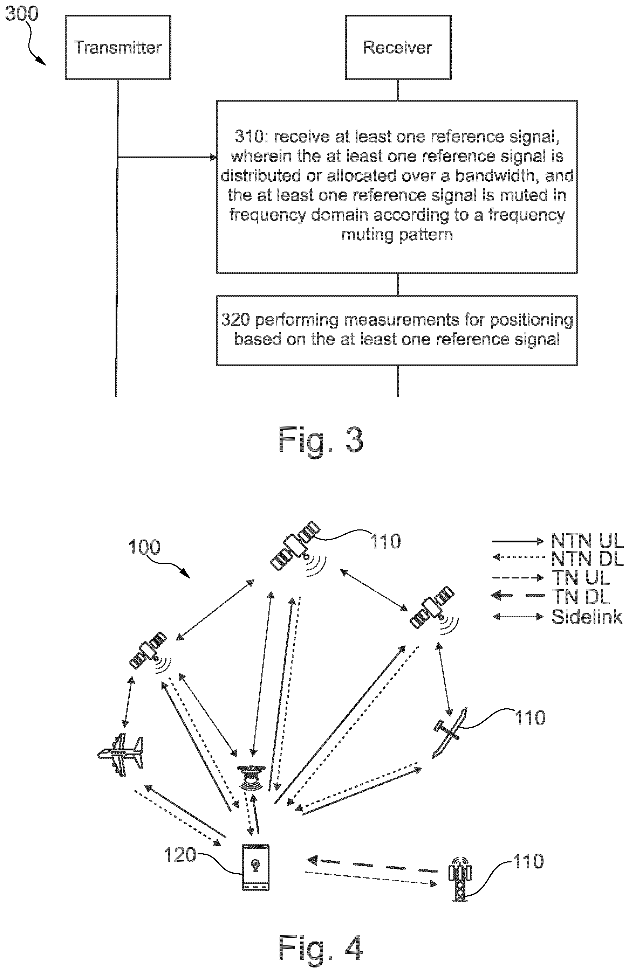

Fig. 3 illustrates in a schematic diagram a method 300 for supporting positioning services in a communication system. The method is applicable to, for example, the above communication system 100. The method 300 corresponds to the receiver-side as compared with the transmitter-side as in the method 200 above.

The method 300 comprises receiving 310, by a receiver, at least one reference signal from a transmitter. As in the method 200 above, the at least one transmitter may be one of the at least one network device 110 and the at least one user equipment 120, depending on a direction of a communication link between the at least one network device 110 and the at least one user equipment 120. Correspondingly, the receiver may be the other one of the at least one network device 110 and the at least one user equipment 120. Thereby, the at least one reference signal is distributed or allocated over a bandwidth, and the at least one reference signal is muted in frequency domain according to a frequency muting pattern. For implementation of the latter, reference is made to the description of the method 200 above, which will therefore not repeated here.

The method 300 further comprises performing 320, by the receiver, measurements for positioning based on the at least one reference signal. For example, the receiver may perform measurements for positioning. The measurements may depend on transmission direction, for example DL, UL or SL. These measurements may then be reported back to e.g. the network.

Fig. 4 illustrates in a schematic diagram another example of the communication system 100, i.e. an exemplary application scenario, to which embodiments disclosed herein are applicable. The communication system 100 of Fig. 4 is applicable to a method for supporting positioning services in a communication system according to an embodiment. As illustrated in Fig. 4, the communication system 100 may comprise multiple network devices 110, wherein in Fig. 4 for an better overview only some network devices are denoted by reference signs, and at least one user equipment 120. One of the at least one network device 110 and the at least one user equipment 120 may be referred to as a transmitter, and the other one of the at least one network device 110 and the at least one user equipment 120 may be referred to as a receiver, depending on a direction of a communication link between the at least one network device 110 and the at least one user equipment 120, which link may be downlink (DL), uplink (UL), or sidelink (SL). It is noted that each of the at least one network device 110 and the at least one user equipment 120 may also be referred to as a communication apparatus.

As indicated in Fig. 4, in at least some embodiments, the communication network 100 may comprise or may form a non-terrestrial network (NTN), or a joint combination of a NTN and a terrestrial network (TN). Although the methods and apparatuses disclosed herein can be beneficially used in a purely TN, such as 5G NR, future 6G, etc., they may be particularly beneficial when the different Doppler frequencies and/or time delays of the at least one transmitter in an NTN have to be taken into account, since muting the at least one reference signal in the frequency domain may at least reduce or, more ideally, avoid interference.

In Fig. 4, depending on whether it is DL, UL or SL, the at least one transmitter or the receiver may be at least one of a satellite, a high-altitude platform station (HAPS), an aircraft, a drone, a spacecraft, and a mobile base station. For example, the time delay in signal transmission may vary among those types of transmitters or platforms, respectively. For those transmitters, muting the at least one reference signal in the frequency domain may at least reduce or, more ideally, avoid interference. Alternatively or additionally, the at least one transmitter may be fixed base station. The above may also be referred to as different platforms. Further, the at least one transmitter or the receiver may be a user equipment (UE).

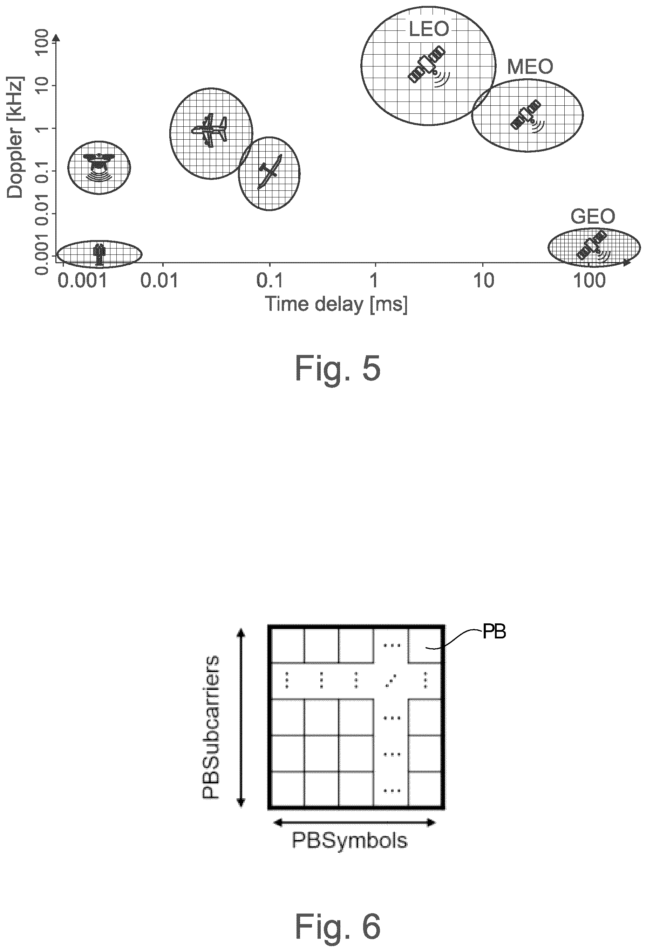

Fig. 5 illustrates in a schematic diagram exemplary transmitters from different platforms on ground, in air and in space. In Fig. 5, the vertical axis denotes the Doppler frequency in kHz,. The horizontal axis denotes the time delay in ms. As can be learned from Fig. 5, such transmitters from different platforms may have different time delays and different Doppler frequencies. The embodiments disclosed herein can even reduce or avoid interference with this variety of Doppler frequencies and time delays.

Fig. 6 illustrates in a schematic diagram an exemplary positioning block (PB), where the size of the PB is at least one symbol in the time domain and at least one subcarrier in the frequency domain. For example, one positioning block (PB) may be defined with the size of one resource block (RB) in 4G or 5G standards, which consists of 12 consecutive subcarrier and 14 consecutive symbols. It is to be noted that in a future communication system or standard, the definition of a PB may differ from a RB, wherein this is not limited herein. The size of the positioning block (PB) is defined by the parameter "PBSubcarriers" in the frequency domain and by the parameter "PBSymbols" in the time domain. The parameter "PBSubcarriers" is the number of subcarriers within the PB in the frequency domain, and "PBSymbols" is the number of symbols within the PB in the time domain.

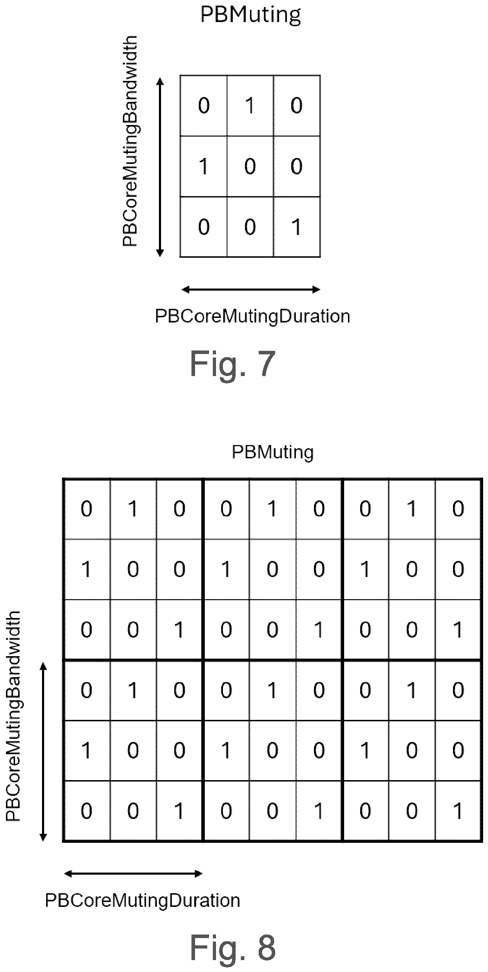

Fig. 7 is a schematic diagram illustrating an exemplary frequency muting pattern implemented or set by using a bit map, with a set of parameters that can be used to implement the bit map. Within the bit map, "1" corresponds to the active or transmitting PBs and "0" corresponds to the muted PBs.

For example, the frequency muting pattern may be implemented by a corresponding parameter, which may be referred to as "PBMuting". Further, by way of example, at least a size of the frequency pattern may configurable by at least one parameter. For example, a parameter, which may be referred to as "PBCoreMutingBandwidth", may configure the size of the frequency muting pattern bit map with at least one PB in the frequency domain. Further, by way of example, the parameter "PBCoreMutingDuration" may configure the size of the frequency muting pattern bit map with at least one PB in the frequency domain. The PBCoreMutingBandwidth is expressed in unit of PBs in the frequency domain, and the PBCoreMutingDuration is expressed in units of PBs in the time domain. These parameters can be configured and/or adapted every interval by a corresponding parameter, which may be referred to as "PBMutingUpdatelnterval".

The frequency muting pattern may be extended beyond the "PBCoreMutingBandwidth" by repeating the pattern in the frequency domain. This frequency repetition of the frequency muting pattern can be configurable with a parameter, which may be referred to as "PBCoreMutingBandwidthRepetition". The size of the extended frequency pattern in the frequency domain is equal to the multiplication of the "PBCoreMutingBandwidth" and "PBCoreMutingBandwidthRepetition". The frequency muting pattern may also be extended beyond the "PBCoreMutingDuration" by repeating the pattern in the time domain. This time repetition of the frequency muting pattern can be configurable with a parameter, which may be referred to as "PBCoreMutingDurationRepetition". The size of the extended frequency pattern in the time domain is equal to the multiplication of the "PBCoreMutingDuration" and "PBCoreMutingDurationRepetition". The extended frequency pattern can only mute resources within the reference signal (RS) allocation. The use of parameters "PBCoreMutingBandwidthRepetition" and "PBCoreMutingDurationRepetition" enables to reduce the information size to describe the extended frequency muting pattern.

Fig. 8 also illustrates an example of a frequency muting pattern configured with "PBCoreMutingBandwidthRepetition" and "PBCoreMutingDurationRepetition" parameters. By way of example, the "PBCoreMutingBandwidthRepetition" is equal two and "PBCoreMutingDurationRepetition" is set three.

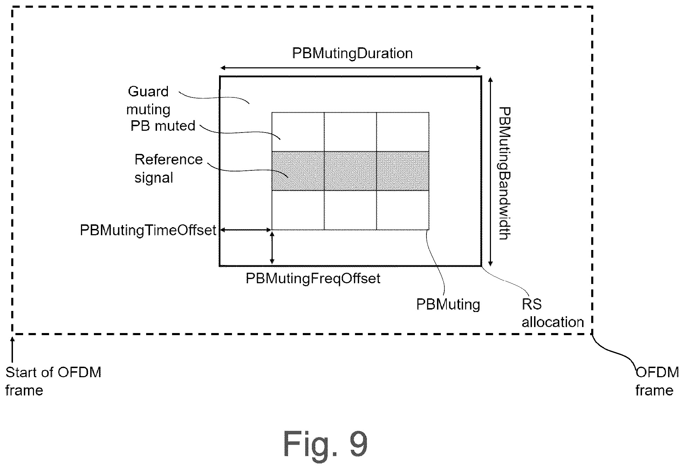

Fig. 9 is a schematic diagram illustrating an exemplary application of the muting pattern within the reference signal (RS) allocation in an example OFDM frame. The muting pattern is only applicable to the resources within the RS allocation. The size of the RS allocation is defined by the reference signal configuration with time and frequency parameters, which are here called "PBMutingDuration" in the time domain with minimum size equal to the "PBCoreMutingDuration", and "PBMutingBandwidth" in the frequency domain with minimum size equal to the "PBCoreMutingBandwidth". The bit map can also be shifted by the "PBMutingTimeOffset" in the time domain, which can be expressed in symbols or PBs, and the bit map can be shifted by the "PBMutingFreqOffset" in the frequency domain, which can be expressed in subcarriers or PBs. The "PBMutingTimeOffset" can be configurable and/or adaptable according to the time delay of at least one transmitter. The "PBMutingFreqOffset" can be configurable and/or adaptable according to the Doppler offset of at least one transmitter. For example, a LEO constellation in 1200 km orbit height is considered with maximum time-delay difference of 6.4 ms and maximum/minimum Doppler frequency of ±41kHz from Table 1 and an exemplary 5G NR numerology with 30 kHz subcarrier spacing is used. By way of example, the "PBMutingTimeOffset" can be set to a maximum of 180 symbols, rounded up with the maximum time-delay difference of 6.4 ms multiplied by the number of symbols per ms, which is 28 symbols per ms in the exemplary 5G NR numerology with 30 kHz subcarrier spacing. By way of example, the "PBMutingFreqOffset" can be set to 3 subcarriers, rounded up with the maximum Doppler difference divided by the 30 kHz subcarrier spacing.

The "PBMutingTimeOffset" and "PBMutingFreqOffset" avoids interference between the reference signals of at least one transmitter. The "PBMutingTimeOffset" parameter is a guard interval between the start time of the RS allocation and the start time of the muting pattern. The "PBMutingTimeOffset" parameter mutes the transmission of the reference signal from the applicable transmitter for those resources within the "PBMutingTimeOffset" guard interval. The "PBMutingFreqOffset" parameter is a guard band between the start frequency of the RS allocation and the start frequency of the muting pattern. The "PBMutingFreqOffset" parameter mutes the transmission of the reference signal from the applicable transmitter for those resources within the "PBMutingFreqOffset" guard band.

For example, the muting pattern above mentioned is implemented or set by using a bit map, wherein "1" corresponds to the active or transmitting PB and "0" corresponds to the muted PB. The size of the frequency muting pattern bit map can be defined by parameter "PBCoreMutingBandwidth" in the frequency domain and by the parameter "PBCoreMutingDuration" in the time domain. By way of example, Fig. 9 defines "PBCoreMutingBandwidth" equal to 3 PBs and "PBCoreMutingDuration" equal to 3 PBs.

Fig. 9 also illustrates an example of resources muted within the reference signal (RS) allocation and not covered by the frequency muting pattern, which may be referred to as "guard muting". The "guard muting" is defined by the "PBMutingTimeOffset" guard interval, the "PBMutingFreqOffset" guard band, the time interval between "PBMutingDuration" minus the combined sum of "PBMutingTimeOffset" and "PBCoreMutingDuration", and the frequency band between "PBMutingBandwidth" minus the combined sum of "PBMutingFreqOffset" and "PBCoreMutingBandwidth". The "guard muting" mutes always the reference signal of the applicable transmitter within the RS allocation.

The frequency muting pattern parameters within Fig. 9 may be configured and/or adapted every "PBMutingUpdatelnterval". For example, "PBMutingUpdatelnterval" can be optimized to the expected time-delay difference between transmitters to reduce the "PBMutingTimeOffset". By way of example, the maximum time-delay difference of two LEO satellites in 1200 km orbit height can be approx. 150 µs for a "PBMutingUpdatelnterval" of 10 s and approx. 30 µs for a "PBMutingUpdatelnterval" of 2 s. For this example, the reduction of the "PBMutingUpdatelnterval" implies a reduction of "PBMutingTimeOffset" from five symbols to one symbol for an exemplary 5G NR numerology with 30 kHz subcarrier spacing. For example, the "PBMutingFreqOffset" can be configured and/or adapted depending on the Doppler difference between transmitters within the "PBMutingUpdatelnterval". For example, the bit map of the frequency muting pattern can be configured and/or adapted depending on the number of transmitters within the "PBMutingUpdatelnterval". For example, the size of the frequency muting pattern with "PBCoreMutingDuration" and "PBCoreMutingBandwidth" can be configured and/or adapted depending on the number of transmitters within the "PBMutingUpdatelnterval".

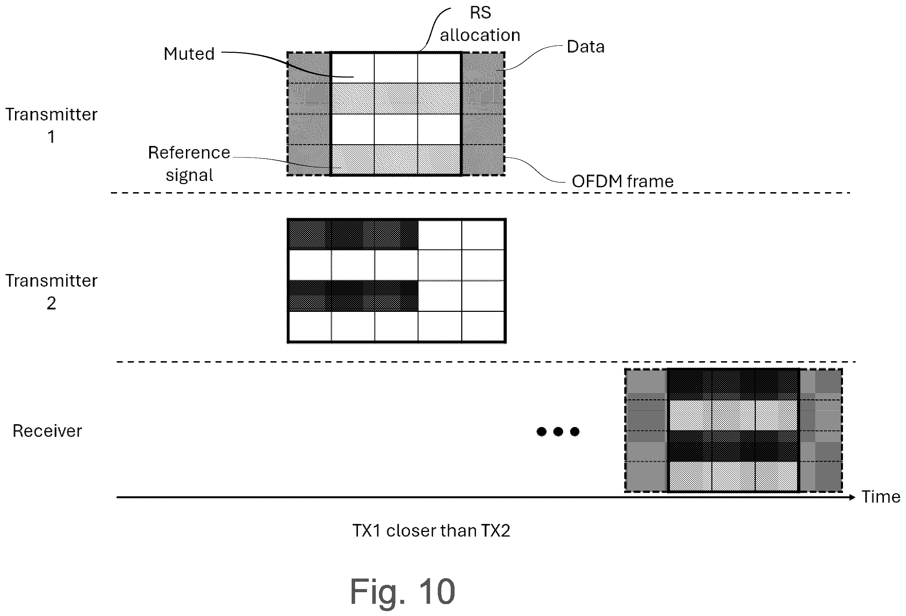

Fig. 10 is an exemplary schematic diagram of the frequency muting pattern for two different transmitters, where each of them has a different distance to the receiver. Transmitter 1, i.e. TX1, is closer to the receiver than transmitter 2, i.e. TX2. Transmitter 1 transmits data and reference signals for positioning, while transmitter 2 only transmits reference signals for positioning. A different frequency muting pattern is assigned to each transmitter to avoid interference at the receiver. By way of example, the frequency muting pattern of transmitter 1 is defined by "PBCoreMutingBandwidth" equal to 4 PBs, "PBMutingBandwidth" equal to 4 PBs, "PBCoreMutingDuration" equal to 3 PBs, "PBMutingDuration" equal to 3 PBs, "PBMutingTimeOffset" equal to 0 PBs, and "PBMutingFreqOffset" equal to 0 PBs. By way of example, the frequency muting pattern of transmitter 2 is defined by "PBCoreMutingBandwidth" equal to 4 PBs for a "PBMutingBandwidth" equal to 4 PBs, "PBCoreMutingDuration" equal to 3 PBs, "PBMutingDuration" equal to 5 PBs, "PBMutingTimeOffset" equal to 0 PBs, and "PBMutingFreqOffset" equal to 0 PBs. By way of example, the RS allocation of transmitter 1 is delayed one PB with respect to the start of the radio frame, while the RS allocation of transmitter 2 starts with the radio frame. By way of example, the time-delay difference between transmitters is equal to 1 PB. The bit map of the frequency muting pattern of transmitter 1 is the opposite of the bit map of the frequency muting pattern of transmitter 2 to avoid interference at the receiver.

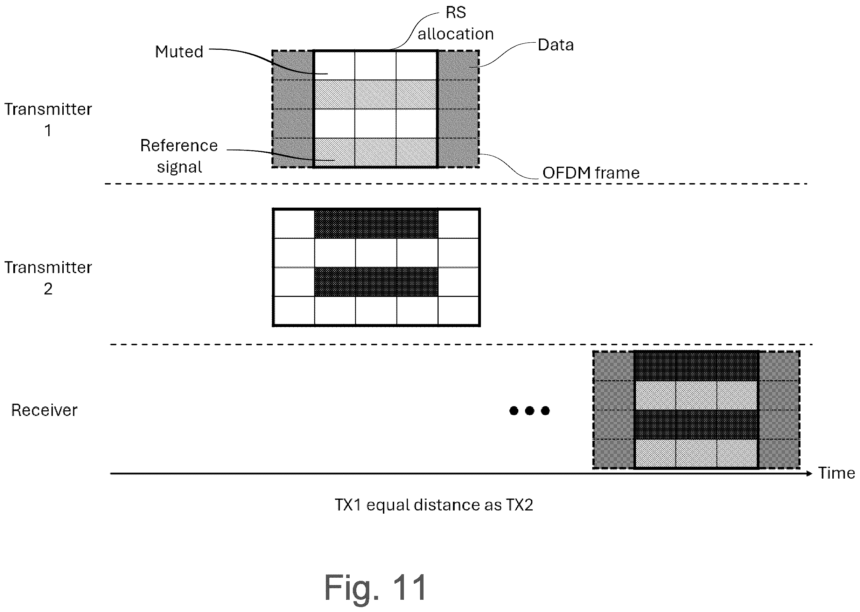

Fig. 11 is an exemplary schematic diagram of the frequency muting pattern with the same RS allocation for transmitter 1 and transmitter 2 as in Fig. 10, but transmitter 1 and transmitter 2 are at the same or equal distance to the receiver. By way of example, the time-delay difference between transmitters is equal to 0 PB. By way of example, the "PBMutingTimeOffset" of transmitter 2 is set to 1 PB, while the rest of parameters of the frequency muting pattern of transmitter 1 and transmitter 2 are the same as for Fig. 10. This example configuration avoids interference between transmitters.

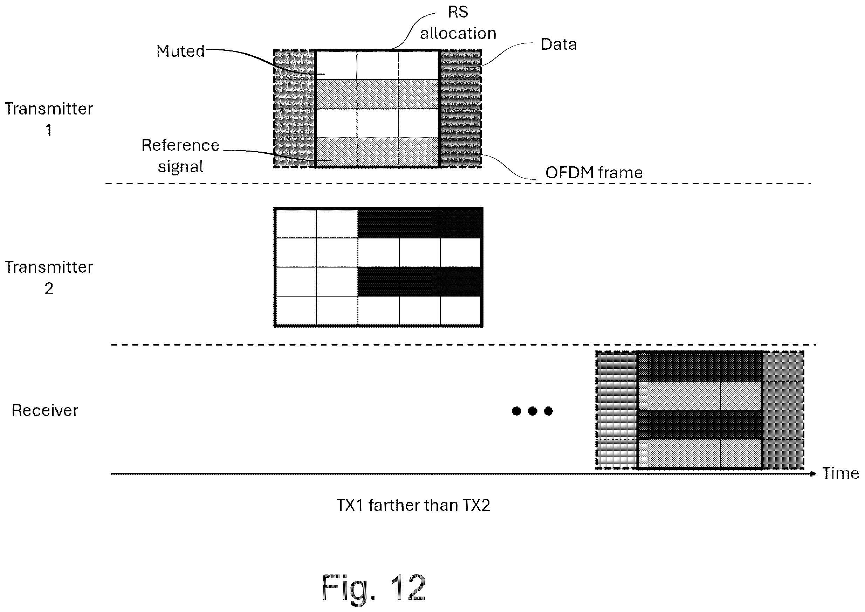

Fig. 12 is an exemplary schematic diagram of the frequency muting pattern with the same RS allocation for transmitter 1 and transmitter 2 as in Fig. 10, but transmitter 1 is farther to the receiver than transmitter 2. By way of example, the time-delay difference between transmitters is equal to -1 PB. By way of example, the "PBMutingTimeOffset" of transmitter 2 is set to 2 PB, while the rest of parameters of the frequency muting pattern of transmitter 1 and transmitter 2 are the same as for Fig. 10. This example configuration avoids interference between transmitters.

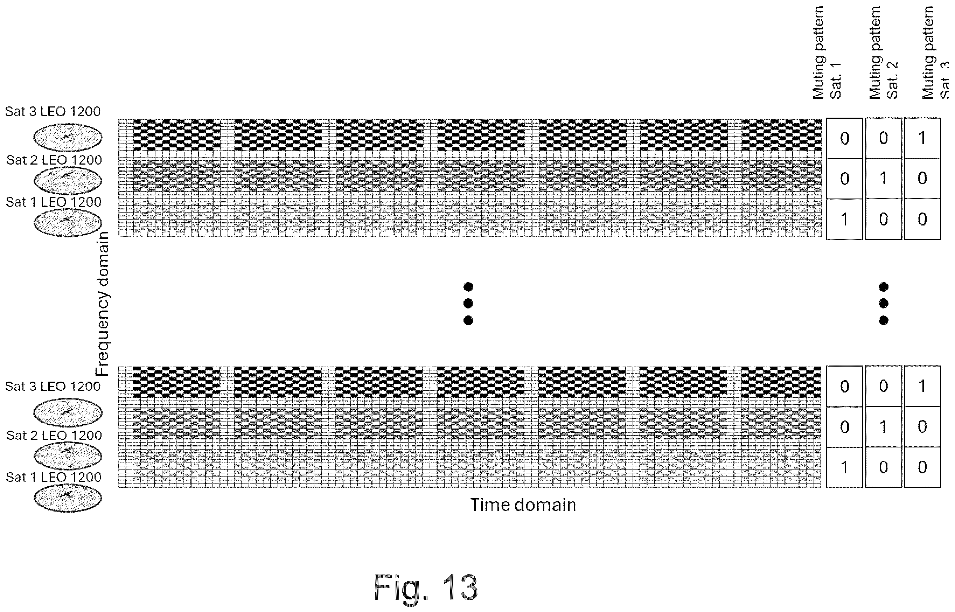

Fig. 13 is a schematic diagram of an exemplary reference signal allocation according to the frequency muting pattern and observed by the receiver. In this example, multiple transmitters are deployed. By way of example, Fig. 13 illustrates three transmitters located in three orbits, where the transmitters, e.g. satellites, may have the same Doppler frequency and time delay.

Fig. 13 depicts the case when the transmitters of all three orbits transmit reference signals only in their assigned PBs and the rest of the PBs are muted. By way of example, the PB is equivalent to a RB in 4G or 5G standard. The respective RBs with the reference signals are illustrated on the left in Fig. 13. On the right in Fig. 13, the respective frequency muting patterns, namely muting pattern 1, muting pattern 2 and muting pattern 3 are illustrated in form of a respective bit map.

Figs. 13 to 15 illustrate three examples of the mechanism of the frequency muting pattern depending on a constellation and transmitter platforms. Depending on the number of transmitter platforms transmitting, the "PBCoreMutingBandwidth" is changing and is defining how many positioning blocks (PBs) are to be muted.

For an exemplary 5G NR numerology with 30 kHz subcarrier spacing, Table 2 indicates exemplary minimum numbers of subcarriers (sc) that need to be muted between the PBs, which can be configured with ""PBMutingFreqOffset".

**Table 2:**

| Transmitting platform | Doppler [Hz/kHz] | Guard band [sc] | Time delay [µs/ms] |
|---|---|---|---|
| Fixed ground gNodeB | 0 | 0 | <30µs |
| Moving ground vehicle | ~0-600Hz | 1 | <30µs |
| Drone | ~0-100Hz | 1 | <2µs |
| Aircraft | ~1kHz | 1 | <0.05ms |
| HAPS | ~100Hz | 1 | <0.1ms |
| LEO 1200 | -41kHz | 3 | ~4-10.4ms |
| LEO 600 | ~43kHz | 3 | -2.5-6.5ms |
| MEO | 15kHz | 1 | ~70ms |
| GEO | 0 Hz | 0 | ~ 120ms |

It can be learned from Table 2 that, for example, for LEO constellations, the minimum number of subcarriers (sc) to be muted between the RBs are 3 (three). Further, for platforms with a low Doppler frequency, the minimum number of subcarriers (sc) to be muted between the RBs is nearly 0 (zero).

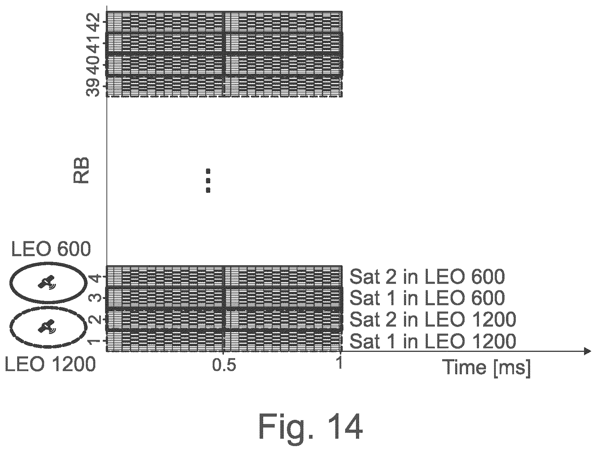

Fig. 14 is a schematic diagram in which the vertical axis denotes RBs and the horizontal axis denotes the time in ms. Fig. 14 is used to illustrate the mechanism of the frequency muting pattern according to a second example, in which there are two satellites as transmitters, transmitting from each of the LEO 600 and LEO 1200 constellations (c.f. Table 2). That is, the total number of transmitters is 4 (four). Compared to the first example above, the guard band in frequency domain does not change significantly, since the Doppler frequencies of the different constellations are not significant. In this second example, the PBCoreMutingBandwidth extends to 4, since there are 4 transmitters. The resulting frequency muting pattern is therefore (1 0 0 0).

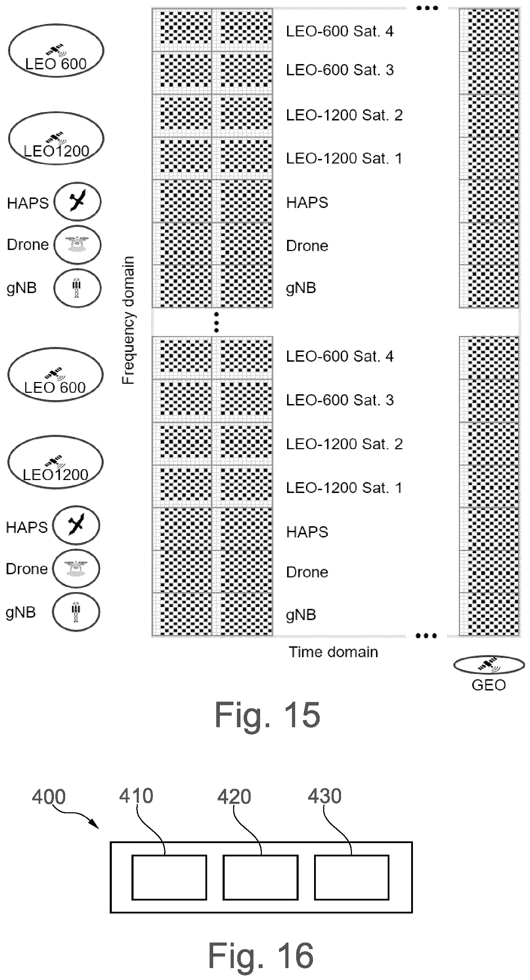

Fig. 15 is a schematic diagram in which the vertical axis denotes RBs and the horizontal axis denotes the time in ms. Fig. 15 is used to illustrate the mechanism of the frequency muting pattern according to a third example, in which there are multiple transmitters with different platforms, such as gNB, drone, HAPS, LEO 600 satellite, LEO 1200 satellite, and GEO satellite. For the platforms with no Doppler frequency (c.f. Table 2) no margin between the RBs in the frequency domain needs to be empty, i.e. muted. In Fig. 15, this can be seen in between the RBs of the gNB, HAPS, drones and GEO satellite. Between the RBs of the LEO satellites the 3 subcarriers (sc) are empty, i.e. muted. as explained in the first two examples above.

Fig. 16 illustrates an exemplary communication apparatus 400 which is configured to carry out the methods disclosed herein, particularly the above methods 200 and/or 300, and/or to at least partly implement the communication system 100. In at least some embodiments, the communication apparatus 400 may be used to implement at least one of the transmitter, receiver, network device 110, and user equipment 120.

The communication apparatus 400 comprises a transceiver 410, a memory 420, configured to store computer instructions, and at least one processor 430 communicatively coupled to the transceiver 410 and the memory 420. The at least one processor 430 is configured to execute the computer instructions stored in the memory 420, to enable the communication apparatus, e.g. the at least one of the transmitter, receiver, network device 110, and user equipment 120, to carry out the at least one of the method disclosed herein, particularly method 200 and/or method 300.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification. The embodiments were chosen and described in order to best explain the principles of the invention and its practical applications, to thereby enable others skilled in the art to best utilize the invention and various embodiments with various modifications as are suited to the particular use contemplated.

### LIST OF REFERENCE SIGNS

- 100: communication system
- 110: network device
- 120: user equipment (UE)
- 200: method
- 210: method step
- 220: method step
- 230: method step
- 300: method
- 310: method step
- 320: method step
- 400: communication apparatus
- 410: transceiver
- 420: memory
- 430: processor(s)

## Claims

1. A method (200) for supporting positioning services in a communication system, the method comprising:
generating (210), by at least one transmitter (110, 120), at least one reference signal;
allocating (220), by the at least one transmitter (110, 120), the at least one reference signal over a bandwidth, wherein the at least one reference signal is muted in frequency domain according to a frequency muting pattern; and
transmitting (230), by the at least one transmitter (110, 120), the allocated at least one reference signal to a receiver (110, 120).

2. The method of claim 1, wherein the frequency muting pattern indicates one or more positioning blocks, PBs, to be muted in the frequency domain to avoid transmitting the at least one reference signal in the one or more PBs.

3. The method of claim 1 or 2, wherein the frequency muting pattern is configurable or configured based on at least one of a Doppler frequency of the at least one transmitter (110, 120), a time delay in signal transmission from the at least one transmitter (110, 120), the Doppler frequency and the time delay being observed by the receiver (120, 110), and wherein at least one Doppler frequency and time delay may vary over time.

4. The method of any one of the preceding claims, wherein the frequency muting pattern is set by adapting the reference signal generation.

5. The method of any one of the preceding claims, wherein the frequency muting pattern is set by using a bit map, in which each bit is set to one for transmitting the positioning block and set to zero for a muted positioning block, PB.

6. The method of any one of the preceding claims, wherein the at least one reference signal is distributed considering at least one configurable guard band in the frequency domain, the length of the guard band in frequency domain is based on Doppler in signal transmission from the at least one transmitter (110, 120).

7. The method of any one of the preceding claims, wherein the at least one reference signal is distributed considering at least one configurable guard interval in the time domain, the length of the guard interval in time domain is based on a time delay in signal transmission from the at least one transmitter (110, 120).

8. The method of any one of the preceding claims, wherein a link direction from the at least one transmitter (110, 120) is downlink, DL, and the at least one reference signal is at least one of a positioning reference signal, PRS.

9. The method of any one of claims 1 to 7, wherein a link direction from the at least one transmitter (110, 120) is uplink, UL, and the at least one reference signal is a sounding reference signal, SRS.

10. The method of any one of claims 1 to 7, wherein a link from the at least one transmitter (110, 120) is a sidelink, SL, and the at least one reference signal is a sidelink positioning reference signal, SL-PRS.

11. The method of any one of the preceding claims, wherein the communication system comprises or forms a non-terrestrial network, NTN, or a joint combination of a NTN and a terrestrial network, TN.

12. The method of any one of the preceding claims, wherein the at least one transmitter (110, 120) and/or the receiver (110, 120) is at least one of a satellite, a high-altitude platform station (HAPS), an aircraft, a drone, a spacecraft, and a mobile base station.

13. The method of any one of claims 1 to 11, wherein the at least one transmitter (110, 120) and/or the receiver (110, 120) is a user equipment, UE.

14. A method (300) for supporting positioning services in a communication system, the method comprising:
receiving (310), by a receiver (110, 120), at least one reference signal from a transmitter (110, 120);
wherein the at least one reference signal is distributed or allocated over a bandwidth, and the at least one reference signal is muted in frequency domain according to a frequency muting pattern; and
performing (320), by the receiver (110, 120), measurements for positioning based on the at least one reference signal.

15. A communication apparatus (400), comprising:
a transceiver (410);
a memory (420), configured to store computer instructions; and
a processor (430) communicatively coupled to the transceiver and the memory;
wherein the processor (430) is configured to execute the computer instructions stored in the memory (420), to enable the communication apparatus (400) to carry out the method according to any one of claims 1 to 13, or to carry out the method according to claim 14.
